Europäisches Patentamt

European Patent Office

Office européen des brevets

(11) Publication number: **0 216 159 B1**

## EUROPEAN PATENT SPECIFICATION

(45) Date of publication of patent specification: **02.02.94**  (51) Int. Cl.5: **G01D 5/38**

(21) Application number: **86111651.5**

(22) Date of filing: **22.08.86**

(54) **Position detecting device.**

(30) Priority: **23.08.85 JP 185211/85**
**11.10.85 JP 227102/85**
**18.06.86 JP 142022/86**

(43) Date of publication of application:
**01.04.87 Bulletin 87/14**

(45) Publication of the grant of the patent:
**02.02.94 Bulletin 94/05**

(84) Designated Contracting States:
**DE FR GB**

(56) References cited:

OPTICS AND LASER TECHNOLOGY, vol. 17,
no. 2, April 1985, pages 89-95, Butterworth &
Co. (Publishers) Ltd, London, GB; K. HANE et
al.: "Moire displacement measurement tech-
nique for a linear encoder"

APPLIED OPTICS, vol. 15, no. 5, May 1976,
pages 1234-1240, New York, US; K. PATORSKI
et al.: "Collimation test by double grating
shearing interferometer"

OPTICS COMMUNICATIONS, vol. 27, no. 3,
December 1978, pages 303-306, Amsterdam,
NL; K. PATORSKI: "Position monitoring tech-

nique using double diffraction phenom-
enon"

PATENT ABSTRACTS OF JAPAN, vol. 7, no.
10 (P-168)[1155], 14th January 1983; & JP-
A-57 169 612 (TOUKIYOU KOUGAKU KIKAI
K.K.) 19-10-1982

(73) Proprietor: **MATSUSHITA ELECTRIC INDUSTRI-**
**AL CO., LTD.**
**1006, Oaza Kadoma**
**Kadoma-shi, Osaka(JP)**

(72) Inventor: **Okutani, Norio**
**37-25, Narita-higashigaoka**
**Neyagawa City, 572(JP)**
Inventor: **Ueda, Tomiyasu**
**32-8, Nomura-motomachi**
**Hirakata City, 573-01(JP)**
Inventor: **Maruo, Tomohiro**
**6-307, Myokenzaka 3-chome**
**Katano City, 576(JP)**

(74) Representative: **Dr. Elisabeth Jung Dr. Jürgen**
**Schirdewahn Dipl.-Ing. Claus Gernhardt**
**Postfach 40 14 68**
**D-80714 München (DE)**

**Description**

**FIELD OF THE INVENTION AND RELATED ART STATEMENT**

**1. FIELD OF THE INVENTION**

The present invention is generally related to a position detecting device of a positioning apparatus, and particularly to a position detecting device using a photoelectric type device.

**2. DESCRIPTION OF THE RELATED ART**

A positioning apparatus for positioning a mechanical member by detecting a rotary angle of the mechanical member is well known. A photoelectric type encoder is widely used as the position detecting device. One example of the conventional photoelectric type encoder is described as follows.

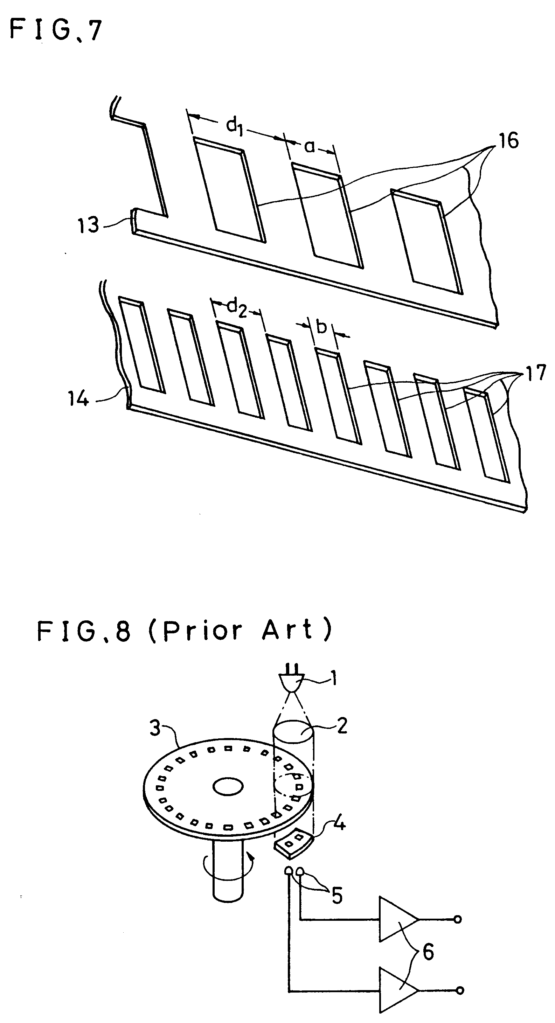

FIG. 8 is a perspective view showing the conventional photoelectric type encoder. As shown in FIG. 8, the photoelectric type encoder comprises a light source 1, a collimator lens 2, a revolution disk 3, a fixed mask 4, a light receiving element 5 and a waveform shaping circuit 6.

The photoelectric type encoder operates as mentioned below. The flux of light emitted from the light source 1 is made parallel by the collimator lens 2. The parallel light penetrates slits of the revolution disk 3 and slits of the fixed mask 4. The light is then photoelectrically-converted by the light receiving element 5. The photoelectrically-converted signal is applied to the waveform shaping circuit 6. When the revolution disk 3 rotates responding to a rotation of a shaft of the mechanical member, the accord and the discord of the slit of the revolution disk 3 and the slit of the fixed mask 4 are repeated. Therefore, a sine wave signal or the like is issued from the waveform shaping circuit 6. The rotation angle of the shaft is detected by using the sine wave signal. Hitherto, filament lamp and light emitting diode are used as the light source of such photoelectric encoder.

It is known that a constant distance between the revolution disk and the fixed mask should be maintained for scanning the regular periodic slits of the revolution disk. And the constant distance can take various lengthes as mentioned below.

When the parallel light penetrates the slits of the revolution disk 3, a diffraction image of the slit of the revolution disk 3 is produced on a certain virtual plane behind the slits plane of the revolution disk 3 by the interference of the diffracted light caused by the slits of the revolution disk 3. The diffraction image can be scanned, for example, by the slits of the fixed mask 4 which has the same grating constant as that of the slits of the revolution disk 3. The certain virtual plane is produced at a distance of $n \cdot P_M^2/\lambda$ ($n = 0, 1, 2, ...$) from the slits plane of the revolution disk 3 under that the grating constant of the slits of the revolution disk 3 is represented by $P_M$ and the wave length of the light is represented by $\lambda$. Therefore, the optimum electrical scanning signal is obtained when the slits plane of the fixed mask 4 is at a distance of $n \cdot P_M^2/\lambda$ from the slits plane of the rotational disk 3. Such error within $\pm 0.1 P_M^2/\lambda$ is allowed (Machine Shop Magazine, pp.208, April, 1962).

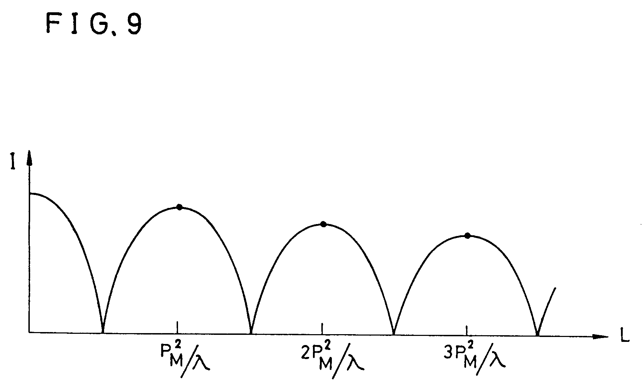

FIG. 9 is a diagram of an amplitude I of the sine wave signal which is obtained by the movement of the revolution disk 3, to a distance L between the revolution disk 3 and the fixed mask 4.

However, complete parallel light flux is not obtained since the luminous area of the filament lamp and the light emitting diode as the light source is large. Therefore, the diffraction image of the revolution disk slits becomes obscure on the fixed mask 4 because of the inferior parallelism and the wide wavelength band. Accordingly, the distance L between the revolution disk 3 and the fixed mask 4 can not be made large, that is, the distance L is generally given by $L \leqq P_M^2/\lambda$. When $P_M$ is minute, the slits are liable to be polluted or destroyed because of the involution of dust etc.

The width of the slit is generally not more than 1/2 of the grating constant, namely, 0.45 to 0.5. Therefore, at a place where the L is $(n-\frac{1}{2}) \cdot P_M^2/\lambda$, the amplitude of the obtained sine wave signal becomes almost zero-th. Therefore, the amplitude of the sine wave signal largely varies responding to the fluctuation of distance L. Then, it is necessary to make the fluctuation of the distance L small in order to very stably detect the position.

In the conventional photoelectric encoder, in order to resolve the above-mentioned problems, the flatness of the revolution disk 3 and the precision of the revolution disk bearing are improved, thereby to suppress the fluctuation of the distance L and to miniaturize the size of the encoder and to realize a high resolution. But the photoelectric encoder is necessary to be manufactured as a precision measuring instrument since the use temperature condition and the load condition of the revolution disk bearing are strictly restricted. Therefore, the photoelectric encoder is difficult to be used for general industrial use.

Otherwise, such conventional encoder is known that relatively parallel light flux is obtained by using a filament lamp of large amount of light and a collimator lens having a long focal length, thereby to improve the obscurity of the slits diffraction image. In such conventional encoder attaining a high resolution and suppressing the bad influence of the fluctuation of the distance L, the shortcoming is that the filament lamp for emitting a large amount of light is weak against vibration or shock and has inferior life. Further, the use of the lens or long focal length for obtaining high parallel light flux induces a large size of luminous system, and therefore the encoder is also difficult to be generally used for industrial use.

As mentioned above, the conventional photoelectric encoder has such problems that the miniaturization and high resolution is difficult to be realized for the industrial use.

In Optics and Laser Technology, Vol. 17, No. 2, April 85, pages 89 to 95, Butterworth & Co (Publishers) Ltd, London, GB, an optical linear encoder is described using a moiré pattern formed by two slit plates having gratings of identical pitch d.

The two slit plates are ideally spaced at an integer multiple of $P_M^2/\lambda$ ($P_M$ : grating pitch ; $\lambda$ : wavelength) and only a single order of the 2nd diffraction pattern is detected. To reduce sensitivity to changes in the gap between the slits the 2nd slit is slightly tilted with respect to the 1st slit.

In Optics Communications, Vol. 27, No. 3, December 1978, pages 303 to 306, Amsterdam, NL, a similar technique and a device based on the moiré effect or double diffraction, directional information is derived by detecting two symmetrical diffraction orders of the 2nd diffraction pattern ( + N,-N). The two resultant optical signals will be in good quadrature if the distance between the slits equals

$$\left(M + \frac{N^2}{4}\right) \cdot P_M^2/\lambda$$

with M,N integers.

In Patent Abstract of Japan, Vol. 7, No. 10 (P-168) [1155] January 14, 1983; & JP-A-57 169 612, a photoelectric encoder is described comprising a movable grating and a fixed grating with the same pitch, a light source and a condensor lens for collimating the ligth from the light source. The position of an image of the first grating formed on the second fixed grating is displaced to left and right to eliminate a phase error included in segment patterns of two segments of the fixed grating by a means for adjusting an interval between the light source and the condensor.

## OBJECT AND SUMMARY OF THE INVENTION

The present invention intends to resolve the above-mentioned problems of the conventional photoelectric encoder, thereby to offer a position detecting device having a small size and superior resolution.

This object is achieved by a position detecting device according to the preamble of claim 1 by the characterizing features of claim 1.

## BRIEF DESCRIPTION OF THE DRAWINGS

FIG.1 is a perspective view showing a position detecting device.
FIG.2 is an enlarged perspective view showing a slit part of the position detecting device of FIG.1.
FIG.3 is a perspective view showing positional relation of Fraunhofer diffraction image.
FIG.4 is a diagram showing a light intensity distribution of the Fraunhofer diffraction image caused by a combination of a regular arrangement of the same openings and a rectangular single opening.
FIG.5 is a diagram showing a relation between S/F and maximum amplitude.
FIG.6 is a diagram showing a relation between $a/d_1$ and minimum amplitude.
FIG.7 is an enlarged perspective view showing a slit part of a position detecting device.
FIG.8 is a perspective view showing a conventional photoelectric type encoder.
FIG.9 is a diagram showing a relation of an amplitude of the detected signal against a distance between two slit planes each having same grating constant.

## DESCRIPTION OF THE PREFERRED EMBODIMENTS

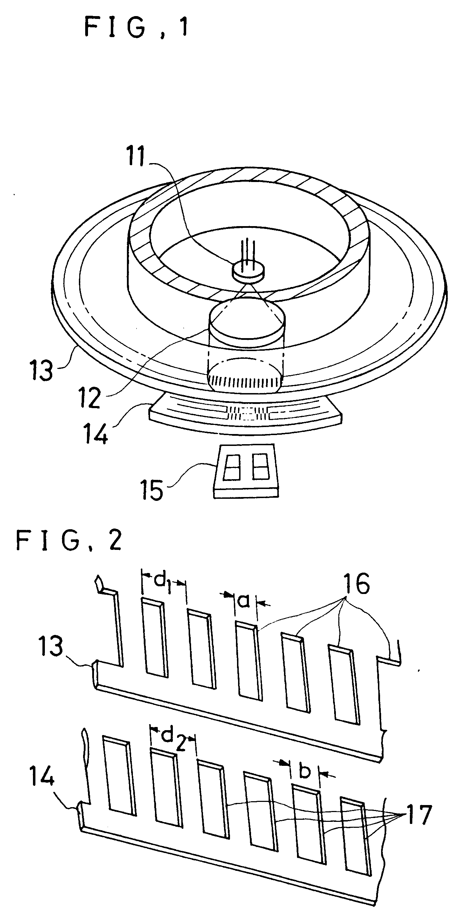

A position detecting device is described as follows referring to the figures. FIG.1 is a perspective view showing a position detecting device. The position detecting device comprises a laser diode 11, a collimator lens 12, a transfer slit plate 13, a fixed slit plate 14 and a light sensing element 15.

An optical mechanism of the position detecting device having the above-mentioned constitution operates as follows.

Light emitted from the luminous face of the laser diode 11 is made parallel by the collimator lens 12 and is irradiated on the transfer slit plate 13. As shown in FIG.2, a great many fine slits 16 of width (a) are made at intervals of distance ($d_1$) (grating constant) on the transfer slit plate 13. The light penetrates through slit parts of the slits 16 and is obstructed by other part between the slits. The penetrating light is irradiated on the fixed slit plate 14.

The sensing element 15 has four parts corresponding to the four slits groups of the fixed slit plate 14. The slits groups are out of phase each other in order to suppress noise and so on as known in prior art.

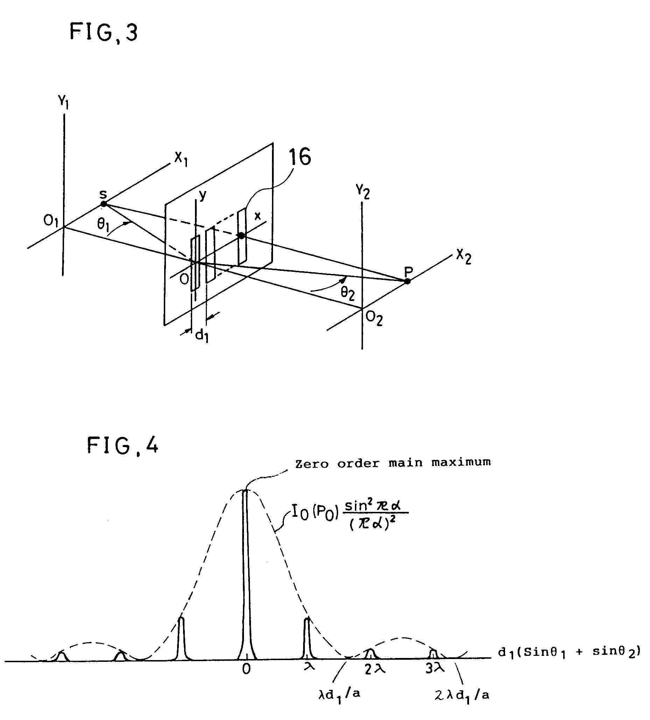

The Fraunhofer diffraction image of the light of wavelength ($\lambda$) penetrating the slit 16 is considered as produced by a combination of a regualr arrangement of the same openings and rectangular single opening, since the slits 16 can be considered to be made by disposing regularly an extremely great many slit openings each having the same rectangular shape. It is supposed that in FIG.3, the direction of the slit 16 is parallel with an axis(y) and the center of the slit 16 is regularly disposed at intervals of distance ($d_1$) on an axis (x). When the light source (s) is a slit which is parallel with an axis ($Y_1$) on an $X_1$-$Y_1$ plane and a center of which is on an axis ($X_1$), a diffraction image (P) is narrow width strips which is parallel with an axis ($Y_2$) and the center of which is on an axis ($X_2$). The intensity distribution I(P) of the diffraction image is represented by

$$I(P) = I_0(P)|F(P)|^2 \qquad (1).$$

The $I_0(P)$ is the intensity distribution of the diffraction image made by the rectangular single opening.
The $I_0(P)$ is given by

$$I_0(P) = I_0(P_0)\frac{\sin^2 \pi \alpha}{(\pi \alpha)^2} \qquad \cdots\cdots\cdots\cdots (2),$$

$$\alpha = \frac{a}{\lambda}(\sin\theta_1 + \sin\theta_2) \qquad \cdots\cdots\cdots\cdots (3),$$

$\theta_1$: angle from the light source against a zero-th slit of the regular arrangement of the same openings as in FIG.3,

$\theta_1$: angle from the image point against the zero-th slit of the regular arrangement of the same openings as in FIG.3.

The $|F(P)|^2$ is a relative intensity distribution of the diffraction image caused by the same openings of N number which are disposed at intervals of distance ($d_1$) on the axis (x) with the first opening being disposed at a point of origin (0).
The $|F(P)|^2$ is represented by

$$|F(P)|^2 = \frac{\sin^2 N\pi\delta}{\sin^2 \pi\delta} \qquad \cdots\cdots\cdots\cdots\cdots (4),$$

$$\text{where} \qquad \delta = \frac{d_1}{\lambda}(\sin\theta_1 + \sin\theta_2) \qquad \cdots\cdots\cdots\cdots (5).$$

FIG. 4 is a diagram showing a relation between the I(P) in the formula (1) and the $d_1(\sin\theta_1 + \sin\theta_2)$ in the $|F(P)|^2$, when the light source is a monochromatic light of wavelength ($\lambda$) (Kogaku Gijutsu hand book (Asakura Shoten)).

Here, the laser diode 11 is used as the light source and the light is made parallel by the collimator lens 12. Therefore, the above-mentioned formulas (3) and (5) are respectively represented as

4

$$\alpha = \frac{a}{\lambda} \sin \theta_2 \qquad \dots \dots \dots \dots \dots \dots \dots \quad (6),$$

$$\text{and} \qquad \delta = \frac{d_1}{\lambda} \sin \theta_2 \qquad \dots \dots \dots \dots \dots \dots \dots \quad (7).$$

Then, the conditions for the appearance of main maximum are,

$d_1 \sin\theta_2 = m\lambda (m = 0, \pm 1, \pm 2 \dots)$ (8).

The width of the main maximum is 2/N of a distance between the main maximums. The width becomes narrower and the main maximum becomes sharper responding to the increase of N. As shown in FIG.4, a dotted line connecting the main maximum of each order of $|F(P)|^2$ shows a distribution of $I_0(P)$ of the rectangular single opening.

The Fraunhofer diffraction image of the slit 16 obtained as mentioned above, is projected on the fixed slit plate 14. As shown in FIG.2, a great many slits 17 of width (b) are arranged at intervals of distance ($d_2$) which is equal to ($d_1$) on the fixed slit 14. The light penetrates at parts of the slits 17 and is obstructed at other parts. The penetrating light is radiated on the light sensing element 15.

When the distance between the main maximums of the Fraunhofer diffraction image projected on the fixed slit plate 14 is equal to the distance $d_2$ of the slit 17 formed on the fixed slit plate 14, that is, the peak of the main maximum is almost within the slit 17, the amplitude of the detected signal issued from the light sensing element 15 becomes maximum.

Now, the distance between the main maximums of the Fraunhofer diffraction image, is uneven on the fixed plate 14. That is, the higher the order is, the longer the distance is. Further, the higher the order is, the smaller the intensity is. Thus, basing on the above-mentioned uneven distances and the smaller intensity, the order of the main maximum, which is to be taken into consideration is determined from a point of practical use. Main factor determining the amplitude of the detected signal is a ratio of the distance ($d_1$) between the slits 16 against the width (a). A typical example is $d_1 \fallingdotseq 2a$. In the example, the intensity of the main maximum of the second or higher order is about 1/22 or less of the main maximum of zero-th order. Therefore, the main maximum of the second or higher order can be neglected, and the amplitude of the detected signal is considered enough when the peak of the main maximum of the zero-th and first order lie within the slit 17.

Here, the intensity of the main maximum of each degree of the Fraunhofer diffraction image is determined by the ratio of the distance ($d_1$) of the slits 16 against the opening width (a) of the slit 16. The smaller the ($d_1/a$) is, the smaller the main maximum of the first or more order is. For the smaller ($d_1/a$), that is, for the large value of (a), the main maximum of lower 1degree can be neglected.

Another factor determining the amplitude of the detected signal is the size (S) of the light source. In FIG.3, the light source (s) is considered as a point light source, but in practical example the light source (s) having a size (S) is disposed at an optical infinite distance by using a collimator lens of focal length (F). Therefore, the light source is considered as a set of point light sources and it can be considered that the point light sources are distributed within such angle of S/F at an infinite distance. Therefore, the Fraunhofer diffraction image of the slit 16 has a spread angle of approximately S/F.

Another factor determining the amplitude of the detected signal is a distance between the transfer slit plate 13 and the fixed slit plate 14. The distance is liable to vary, and therefore the distance between the main maximums of the Fraunhofer diffraction image varies. At such distance, when the average distance between the main maximum of the zero-th order and the main maximum of the first order is made equal to the distance ($d_2$) of the slit 17, extent of possible variation of the distance betwen the transfer slit plate 13 and the fixed slit plate 14 becomes largest. When the distance between the main maximum of zero-th order and the main maximum of first order is equal to the distance ($d_2$) of the slit 17, the distance L between the transfer slit plate 13 and the fixed slit plate 14 is determined as follows:

By making in the formula (8),

$m = 1$ (9)

$$\text{and} \quad \sin \theta_2 \doteqdot \tan \theta_2 \frac{d_1}{L} \quad \cdots\cdots\cdots\cdots\cdots\cdots \quad (10)$$

$$L = \frac{d_1^2}{\lambda} \quad \cdots\cdots\cdots\cdots\cdots\cdots\cdots \quad (11)$$

is given.

When the distance between the main maximum of the zero-th order and the main maximum of first order of the Fraunhofer diffraction image is ($Md_1$) (where (M) is a positive integer), the width (w) of the main maximum is given by

$$w = \frac{2MD_1}{N} \quad \cdots\cdots\cdots\cdots\cdots\cdots \quad (12).$$

Under such conditions that the main maximum width (W) determined by the (N) and (M) is not exceeding 1/2 of the distance of the slits 17, that is, under a condition of

$N \geq 4M \quad (13),$

the amplitude of the detected signal is enough. Thus, the distance (L) is given by

$$L = M \cdot \frac{d_1^2}{\lambda} \quad \cdots\cdots\cdots\cdots\cdots\cdots\cdots \quad (14).$$

Practical width (w) of the main maximum is has a relation to the size (S) of the light source and the focal length (F) of the collimator lens. The width (w) is given by

$$w = \frac{2Md_1}{N} + \frac{SL}{F} \quad \cdots\cdots\cdots\cdots\cdots \quad (15).$$

Under such conditions that the (N) is large enough and the width (w) of the main maximum is not exceeding 1/2 of the distance of the slits 17, that is, under the condition of

$$\frac{S}{F} \leq \frac{d_1}{2L} \quad \cdots\cdots\cdots\cdots\cdots\cdots \quad (16),$$

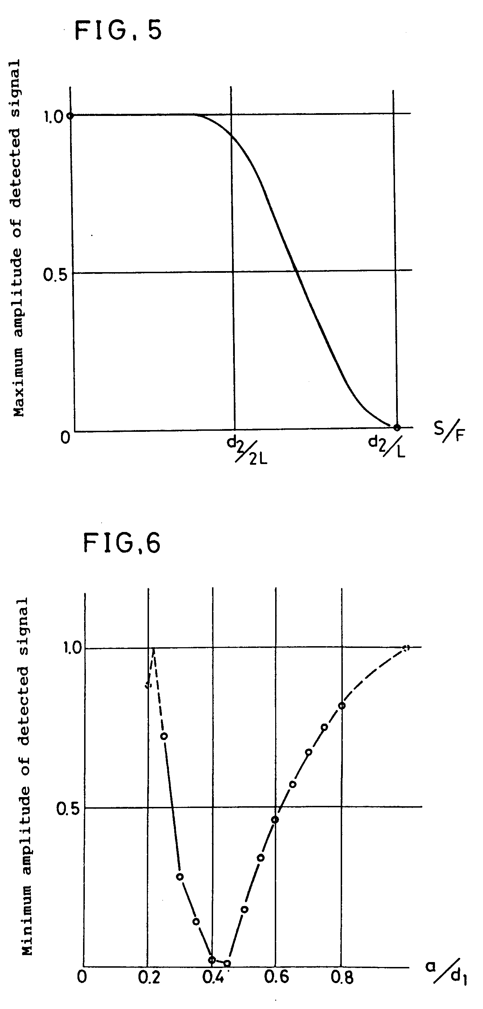

the amplitude of the detected signal is large enough. FIG.5 shows the relation of the variation of the maximum amplitude of the detected signal against the variation of S/F.

Next, the amplitude variation of the detected signal caused by the variation of distance (L) between the transfer slit plate 13 and the fixed slit plate 14, is not equal to integer times of the slit distance ($d_1$) and the amount of the amplitude variation of the detected signal is dependent on the intensity of the main maximum of first or more order.

FIG.6 is such diagram that the intensity and the distances of each main maximum are plotted against values of $a/d_1$ by the formulae (1), (2) and (4), and the minimum amplitude of the detected signal when the distance (L) varies are represented as ratios against the intensities of the main maximums of zero-th order. When the minimum amplitude value is large, the difference from the maximum amplitude value is small and the amplitude variation caused by the variation of the (L) is small.

As mentioned above, the laser diode and the collimator lens are used as the light source. And the Fraunhofer diffraction image caused by the great many slits arranged regularly on the transfer slit plate, is projected on the fixed slit plate, and thereby the main maximum is detected. Thus fringes between brightness and darkness having good distinctness can be detected and the miniaturization and the superior resolution property can be easily obtained. Further, by making the width of the periodic slit on the transfer slit plate to be 1/2 or more of the slit distance of the transfer slit plate, the ratio of the intensity of the first or higher order main maximum against the intensity of the zero-th order main maximum can be decreased. Therefore, stable detected signal is obtained against the variation of the distance between the transfer slit plate and the fixed slit plate. And, miniaturization and high resolution is easily obtainable.

Further, by setting such a constitution of the laser light source that the ratio of the focal length of the collimator lens to the size of the laser diode light source is smaller than the ratio of 1/2 of the distance between the periodic slits on the transfer slit plate to the distance between the transfer slit plate and the fixed slit plate, the dilution of the Fraunhofer diffraction image can be decreased and brightness and darkness fringes of superior clearness is obtainable. Therefore, miniaturization and high resolution property is easily obtainable.

Further, when the Fraunhofer diffraction image is projected on the fixed slit plate in a manner that the distance between the main maximum of zero-th order and the main maximum of first order is about integral times of the slit distance ($d_1$), the distance between the transfer slit plate and the fixed slit plate can be increased without deteriorating the amplitude of the brightness and darkness of fringes of the Fraunhofer diffraction image. Therefore, adverse effect of dust or the like drawn between the transfer slit plate and the fixed slit plate is minimized, and hence, stains and damagings of the slits and resultant inverse influence of short life of the slit plate can be minimized. Thus, the miniaturization and high resolution property are easily obtainable. The distance between the transfer slit plate and the fixed slit plate can be set precisely in practical use, by considering only of the distance between the main maximum of zero-th order and the main maximum of first order. Therefore the distance between the transfer slit plate and the fixed slit plate can be easily determined.

When the Fraunhofer diffraction image is projected on the fixed slit plate in a manner that the distance between the main maximum of zero-th order and the main maximum of first order is equal to integer times of the slit distance ($d_1$), such a constitution is obtained that the variation of the detected signal caused by the variation of the distance between the transfer slit plate and the fixed slit plate is allowed as large as possible. Therefore, the influence of the constitution against the distance between the transfer slit plate and the fixed slit plate can be minimized and miniaturization and high resolution are easily obtainable. When the Fraunhofer diffraction image is projected so that the main maximum of zero-th order to (n) order are within the slit of the fixed slit plate, the amplitude of the brightness and darkness fringes of the Fraunhofer diffraction image is converted, to the utmost, to the amplitude of the detected signal. Therefore, larger amplitude of the detected signal is obtained and the miniaturization and the high resolution are easily obtainable.

Instead of the above-mentioned embodiment wherein the upper slit plate transfers and the lower slit plate is fixed, the configuration may be modified such that the lower slit plate is transferred.

According to the invention fixed slit plate in the above-mentioned device is dispensed with, by using an optical sensing element which has sensing areas corresponding to the slit areas of the fixed slit plate.

Further, instead of the laser diode and the collimator lens used as the light source in the above-mentioned embodiments, any laser light source capable of emitting parallel light beam can be used.

A second example of a position detecting device is described as follows referring to FIG.1 and FIG.7.

In the position detecting device constituted as shown in FIG.1, the Fraunhofer diffraction image of the slit 16 is projected on the fixed slit plate 14. As shown in FIG. 7, a great many slits having a width (b) are arranged on the fixed slit plate 14 at intervals of a distance ($d_2$) which is 1/[integer] of the distance ($d_1$). The light penetrates at parts of the slits 17 and is obstructed at other part. The penetrating light is radiated on the light sensing element 15.

When the distance between the main maximums of the Fraunhofer diffraction image projected on the fixed slit plate 14 is equale to the interger times of the distance ($d_2$) of the slits 17 of the fixed slit plate 14 and further the width of the main maximum is not exceeding 1/2 of the distance ($d_2$) of the slit 17, the amplitude of the detected signal issued from the light sensing element 15 becomes maximum at transferring of the transfer slit plate 13.

Then, when the distance between the main maximum of zero-th order and the main maximum of first order of the Fraunhofer diffraction image is $M_1 d_1$ (wherein $M_1$ is positive integer), the width of the main maximum is given by

$$w = \frac{2M_1 d_1}{N} \quad \cdots\cdots\cdots\cdots\cdots\cdots\cdots (17).$$

When the distance ($d_2$) of the slit 17 of the fixed slit plate 14 is $d_1/M_2$ (wherein $M_2$ is positive integer), the amplitude of the detected signal is large enough under the conditions of

$$w \leqq \frac{d_2}{2} \quad \cdots\cdots\cdots\cdots\cdots\cdots\cdots\cdots (18),$$

namely,

$4M_1 M_2 \leqq N$ (19).

As one example, when $M_1 = 1$,

$M_2 \leqq \frac{N}{4}$ (20).

That is, even when the distance ($d_2$) of the slits 17 of the fixed slit plate 14 becomes as small as 4/N of the distance ($d_1$) of the slit 16 on the transfer slit plate 13, the amplitude of the detected signal is large enough. Therefore, a resolution capacity as high as N/4 times of the case where $d_1 = d_2$ is obtainable.

At this time, the distance L between the transfer slit plate 13 and the fixed slit plate 14 is given as

$$L = \frac{d_1^2}{\lambda} \quad \cdots\cdots\cdots\cdots\cdots\cdots\cdots (23),$$

by making m = 1 (21)

$$\text{and} \qquad \sin\theta_2 \fallingdotseq \tan\theta_2 = \frac{d_1}{L} \quad \cdots\cdots\cdots\cdots\cdots (22)$$

in the formula (8).

Therefore, under the condition of the formula (19) , the distance L is given as

$$L = M_1 \cdot \frac{d_1^2}{\lambda} \quad \cdots\cdots\cdots\cdots\cdots\cdots (24).$$

Thus, the resolution can be improved without making narrow the distance between the transfer slit plate 13 and the fixed slit plate 14.

As mentioned above, by realizing such a constitution that the laser diode and the collimator lens are used as the light source, and the fixed slit plate is disposed so that the distance between the main maximum of zero-th order and the main maximum of first order of the Fraunhofer diffraction image caused by the periodic slits of the transfer slit plate is integer times the distance of the periodic slits, and that the slit distance of the fixed slit plate is 1/[interger] of the slit distance of the transfer slit plate and is twice or more than the width of the main maximum of the Fraunhofer diffraction image caused by the periodic slit of the transfer slit plate, a satisfactorily high resolution is obtained without damaging the amplitude of the brightness and darkness fringes of the Fraunhofer diffraction image. Therefore, the miniaturization and high resolution can be easily obtained without decreasing the distance between the transfer slit plate and the fixed slit plate.

In the above position detecting device wherein the upper slit plate transfers and the lower slit plate is fixed, the configuration may be modified such that the lower slit plate is transferred.

According to the invention fixed slit plate in the above-mentioned device, is dispensed with, by using such light sensing element having a sensing areas corresponding to the slit of the fixed slit plate.

Further, the laser diode and the collimator lens are used as the light source but any laser light source which emitts parallel light flux can be used.

According to the present invention, the high quality parallel light beam is obtainable by the laser light source and the collimator lens, and the large main maximum of zero-th order of the Fraunhofer diffraction image of the periodic slits, which is caused by the laser light coherence is obtainable. Therefore, the clearness of the brightness and darkness fringes increases and the brightness part becomes sharp and beam-like shaped. Further, by disposing the slit plate and the light sensing element at such distance that the distance between the main maximum is made equal to the slit distance, the adverse influence induced by the distance variation or wrong distance setting between the two plates can be minimized. Accordingly, the life of the slit plate can be made long and the miniaturization and high resolution are easily obtained.

Further, according to the present invention, by obtaining the large main maximum of zero-th order of the Fraunhofer diffraction image of the periodic slits, the brightness part becomes to narrow and sharp beam-like shape. Further, by disposing the slit plate and the light sensing element in a manner that the distance between the main maximums becomes equal to the slit distance and, by making the distance between the sensing areas of the light sensing element being 1/[integer] of the distance between the periodic slits of the slit plates at the light source and being twice or more of the width of the main maximum, the high resolution property can be obtained only by making the distance between sensing areas on the light sensing device side without necessitating decrease of distance between the slit plate and the light sensing element. Therefore, the miniaturization and the high resolution are obtainable.

## Claims

1. A photoelectric position detector having a laser light source (11) emitting parallel and coherent light, first slit means (13) provided with two or more periodic slits (16) arranged with a slit period $d_1$ and illuminated by said parallel and coherent light, and a light sensing device (15) receiving the light penetrating said first slit means (13), said first slit means (13) being relatively movable in lateral direction, characterized

in that the light sensing device (15) has light sensitive areas which are arranged as the slits (17) of a grating (14) with slit period $d_2$ at a distance L from the first slit means (13); and

in that said distance L and said slit period $d_2$ are chosen in relation to said slit period $d_1$ in a manner that said period $d_2$ is equal to a distance between main maxima of the interference image of the light leaving said first slit means (13) and illuminating said second slit means (14).

2. A photoelectric position detector in accordance with claim 1,
said laser light source comprising a light source part having a width S and a collimator lens of focal length F, said light source being disposed at a focal point of said collimator lens,
characterized in that the ratio of S/F follows the relation

$S/F \leq d_1/2L$.

3. A photoelectric position detector in accordance with claim 1 or 2, characterized in that the following relations are given:

$d_1 \geq d_2$
$d_2 = d_1/n$ (n:integer)
$S/F \leq d_1/2L$

and

L being predetermined to cause the width of the main maximum of said interference image at said light sensing device (15) to be not more than $1/2\ d_2$.

**4.** A photoelectric position detector in accordance with one of the claims 1 to 3, characterized in that $d_2$ is equal to a distance between main maxima of zero-th order and first order of said interference image, and that

$$L = M(d_1)^2/\lambda,$$

M being an integer and $\lambda$ being a wavelength of said laser light source.

**5.** A photoelectric position detector in accordance with one of the claims 1 to 4, characterized by circuit means for issuing a position signal corresponding to a relative position of said slit means (13), based on the output signal of said light sensing device (15).

**Patentansprüche**

**1.** Ein photoelektrischer Positionsdetektor mit einer Laserlichtquelle (11), die paralleles und kohärentes Licht emittiert, einer ersten Schlitzeinrichtung (13), die mit zwei oder mehr periodischen Schlitzen (16) versehen ist, die mit einer Schlitzperiode $d_1$ angeordnet sind und durch das parallele und kohärente Licht beleuchtet werden, und einer Lichtwahrnehmenden Einrichtung (15), die das Licht empfängt, das durch die erste Schlitzeinrichtung (13) hindurchgelangt, wobei die erste Schlitzeinrichtung (13) in lateraler Richtung relativ beweglich ist,
 dadurch **gekennzeichnet,**
 daß die lichtwahrnehmende Einrichtung (15) lichtsensitive Bereiche hat, die als die Schlitze (17) eines Gitters (14) mit Schlitzperiode $d_2$ bei einem Abstand L von der ersten Schlitzeinrichtung (13) angeordnet sind; und
 daß der Abstand L und die Schlitzperiode $d_2$ im Verhältnis zu der Schlitzperiode $d_1$ auf eine Weise ausgewählt sind, daß die Periode $d_2$ gleich einem Abstand zwischen Hauptmaxima des Interferenzbildes des Lichtes ist, das die erste Schlitzeinrichtung (13) verläßt und die zweite Schlitzeinrichtung (14) beleuchtet.

**2.** Ein photoelektrischer Positionsdetektor nach Anspruch 1, wobei die Laserlichtquelle einen Lichtquellenteil mit einer Breite S und einer Kollimatorlinse der Brennweite F aufweist, wobei die Lichtquelle bei einem Brennpunkt der Kollimatorlinse angeordnet ist,
 dadurch gekennzeichnet, daß das Verhältnis von S/F folgender Beziehung unterliegt

$$S/F \leqq d_1/2L.$$

**3.** Ein photoelektrischer Positionsdetektor nach Anspruch 1 oder 2, dadurch gekennzeichnet, daß die folgenden Beziehungen gelten:

$d_1 \geqq d_2$
$d_2 = d_1/n$ (n:integer)
$S/F \leqq d_1/2L$

und

 L so vorbestimmt ist, daß die Breite des Hauptmaximums des Interferenzbildes bei der lichtwahrnehmenden Einrichtung (15) nicht mehr als $1/2\, d_2$ ist.

**4.** Ein photoelektrischer Positionsdetektor nach einem der Ansprüche 1 bis 3, dadurch gekennzeichnet, daß $d_2$ gleich einem Abstand zwischen Hauptmaxima der nullten Ordnung und erster Ordnung des Interferenzbildes ist und daß

$$L = M(d_1)^2/\lambda$$

ist, wobei M eine ganze Zahl ist und $\lambda$ eine Wellenlänge der Laserlichtquelle ist.

**5.** Ein photoelektrischer Positionsdetektor nach einem der Ansprüche 1 bis 4, gekennzeichnet durch eine Schaltkreiseinrichtung zum Ausgeben eines Positionssignals entsprechend einer relativen Position der Schlitzeinrichtung (13), die auf dem Ausgangssignal der lichtwahrnehmenden Einrichtung (15) basiert.

**Revendications**

1. Détecteur de position photo-électrique comportant une source de lumière laser (11) qui émet une lumière parallèle et cohérente, un premier moyen de lente (13) pourvu de deux lentes périodiques au moins (16) configurées avec une période de lente $d_1$ et éclairées par la lumière parallèle et cohérente, et un dispositif de détection de lumière (15) recevant la lumière entrante du premier moyen de lente (13), le premier moyen de fente (13) étant relativement mobile selon une direction latérale, caractérisé

   en ce que le dispositif de détection de lumière (15) comporte des zones sensibles à la lumière qui sont configurées sous la forme des lentes (17) d'un réseau de diffraction (14), une période de lente $d_2$ se trouvant à une distance L du premier moyen de lente (13), et

   en ce que la distance L et la période de lente $d_2$ sont choisies en relation à la période de lente $d_1$ de manière telle que la période $d_2$ est égale à une distance séparant les valeurs maximales principales de l'image d'interférence de la lumière sortant du premier moyen de lente (13) et éclairant le second moyen de lente (14).

2. Détecteur de position photo-électrique selon la revendication 1,

   la source de lumière laser comprenant une partie de source de lumière de largeur S et un collimateur de locale F, la source de lumière étant disposée en un point focal du collimateur,

   caractérisé en ce que le rapport de S/F suit la relation

   $S/F \leqq d_1/2L.$

3. Détecteur de position photo-électrique selon la revendication 1 ou 2, caractérisé en ce que les relations suivantes sont données :

   $d_1 \geqq d_2$
   $d_2 = d_1/n$ (n:nombre entier)
   $S/F \leqq d_1/2L$

   et

   L étant prédéterminé pour amener la largeur de la valeur maximale principale de l'image d'interférence au niveau du dispositif de détection de lumière (15) à ne pas dépasser $1/2\ d_2$.

4. Détecteur de position photo-électrique selon l'une quelconque des revendications 1 à 3, caractérisé en ce que $d_2$ est égal à une distance séparant les valeurs maximales principales de zéroième ordre et de premier ordre de l'image d'interférence, et en ce que

   $L = M(d_1)^2/\lambda,$

   M étant un nombre entier et $\lambda$ étant une longueur d'onde de la source de lumière laser.

5. Détecteur de position photo-électrique selon l'une quelconque des revendications 1 à 4, caractérisé par un moyen de circuit pour délivrer un signal de position correspondant à une position relative du moyen de fente (13), sur la base du signal de sortie du dispositif de détection de lumière (15).

FIG, 1

FIG, 2

FIG.3

FIG.4

Zero order main maximum

$$I_0(P_0)\frac{\sin^2 \pi\alpha}{(\pi\alpha)^2}$$

$d_1(\sin\theta_1 + \sin\theta_2)$

$\lambda d_1/a$

$2\lambda d_1/a$

# FIG. 5

# FIG. 6

FIG.7

FIG.8 (Prior Art)

F I G. 9